# EUROPÄISCHE PATENTANMELDUNG

(11) **EP 0 674 935 A1**
(43) Veröffentlichungstag der Anmeldung: **04.10.1995**
(21) Anmeldenummer: 95100098.3
(22) Anmeldetag: 05.01.1995
(51) Int. Cl.: B01D 53/02, B01D 53/04, B01D 53/70

(54) **Filter zum Abscheiden von Schadstoffen aus Rauchgasen**

(30) Priorität: 30.03.1994 DE 4411078
(71) Anmelder: MAN Gutehoffnungshütte Aktiengesellschaft, 46145 Oberhausen (DE)
(72) Erfinder: Vollhardt, Frohmut, Dipl.-Ing., D-46149 Oberhausen (DE); Heering, Jürgen Robert, Dr.-Ing., D-41352 Korschenbroich (DE)

(57) **Zusammenfassung**

Die Erfindung betrifft einen Filter zum Abscheiden von Schadstoffen aus Rauchgasen mit einem Filtergehäuse (1) und mit einer Mehrzahl darin mit Abstand waagerecht übereinander oder senkrecht nebeneinander angeordneten Filterkästen (2). Diese enthalten das Filtermedium (3), das Aktivkohle, Herdofenkoks oder ein ähnliches Gut sein kann.

Die Filterkästen werden über Düsen (6) mit Wasser besprüht. Die besprühten Flächen der Filterkästen (2) sind entsprechend wasserdurchlässig ausgebildet.

Rauchgase strömen die Filterkästen (2) von unten an. Diese Flächen der Filterkästen sind entsprechend gasdurchlässig.

Unterhalb der Filterkästen (2) befindet sich ein Wasserauffangkasten (7) mit vertikalen Gasdurchströmrohren (8), aus dem das angesammelte Wasser abgepumpt und zur Wasserbesprühung wiederverwendet wird.

## Beschreibung

Die Erfindung betrifft ein Filter zum Abscheiden von Schadstoffen aus Rauchgasen mit einem Filtergehäuse, enthaltend das Filtermedium Aktivkohle, Herdofenkoks oder dgl., mit einer Einrichtung zum dosierten Zugeben von Wasser, einer Abzugseinrichtung für mit Schadstoffen gesättigten Schlamm, ferner Rauchgaszufuhr- und Rauchgasabzugstutzen.

Aus der EP-B1- 0 490 202 ist ein Aktivkohle-Filter zum Abscheiden von Schadstoffen, wie z.B. Dioxinen und Furanen, aus Rauchgasen vor Eintritt in den Rauchgaskamin bekannt. Zur Adsorption dieser Schadstoffe werden in einem Filtergefäß Aktivkohle mit einem Volumenanteil von 30 - 40 % Wasser gemischt und die Rauchgase in Form von kleinförmigen Bläschenketten durch das Aktivkohle-Wasser-Gemisch geleitet. Das Filtergefäß weist eine perforierte Trennwand als Gasverteiler auf. Der mit Schadstoffen gesättigte Aktivkohle-Schlamm wird abgezogen und durch entsprechende Zugabe von trockener Aktivkohle und Wasser ersetzt.

Das bekannte Aktivkohle-Filter ist in großtechnischen Versuchen erprobt worden und hat die Anforderungen hinsichtlich Abscheidegrad voll erfüllt.

Aufgabe der Erfindung ist es, die konstruktive und verfahrensmäßige Ausführung von Filtern mit dem Filtermedium Aktivkohle, Herdofenkoks oder ähnlichen Filtermitteln, für den Einsatz im Rahmen von beispielsweise Abfallverbrennungsanlagen dahingehend zu verbessern, daß vermieden wird, daß das im Filtergefäß befindliche Filtermedium während des Filtervorgangs gänzlich in einem Wasserbad eingetaucht ist.

Diese Aufgabe wird erfindungsgemäß in der Weise gelöst, wie es im Hauptanspruch angegeben ist. Die Unteransprüche beziehen sich auf weitere vorteilhafte Ausgestaltungen der Erfindung.

Bei der Ausführung des Filters hat man die Auswahl zwischen einer Installation der das Filtermedium enthaltenden Filterkästen in horizontaler oder in vertikaler Anordnung.

Die Filterkästen sind zumindest hinsichtlich der Flächen, die vom Rauchgas angeströmt und mit Wasser besprüht werden, gitterartig gestaltet, so daß sie gas- und wasserdurchlässig sind. Die Maschen der Gitterflächen dürfen selbstverständlich nicht so weit sein, daß das körnige Filtermedium durch die Maschen gelangt.

Das Filtergehäuse ist so konstruiert, daß die Möglichkeit besteht, Filterkästen, beispielsweise zum Zweck des Auswechselns des Filtermediums, leicht auszubauen. Dies kann in der Weise geschehen, daß die Filterkästen wie Schubladen herausgezogen oder herausgehoben werden.

In einem zu unterst angeordneten oben offenen Auffangkasten wird das aus den einzelnen darüber installierten Filterkästen austretende Wasser aufgefangen, wieder nach oben gepumpt und erneut als Sprühwasser benutzt.

Selbstverständlich lassen sich beliebig viele Einzelfilter zu einer Filteranlage zusammenstellen, wobei man dem Filtergehäuse quadratische, vieleckige oder kreisförmige Querschnitte geben kann.

Ausführungsbeispiele des erfindungsgemäßen Filters werden nachstehend anhand von schematischen Zeichnungen erläutert.

Es zeigen:
- Fig. 1: einen Schnitt durch ein Filter mit waagerecht angeordneten Filterkästen und
- Fig. 2: einen Schnitt durch ein Filter mit senkrecht angeordneten Filterkästen.

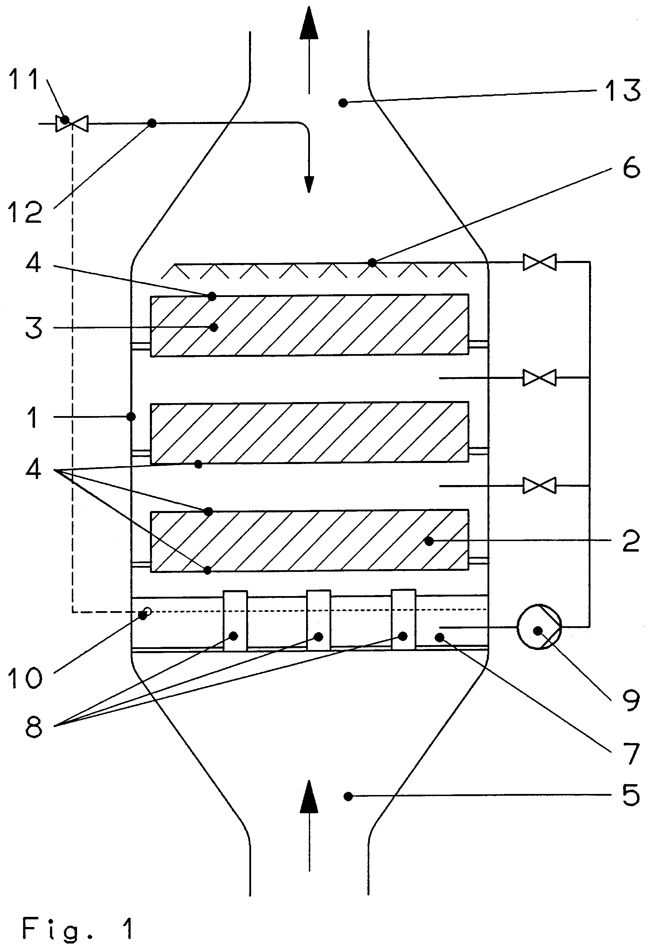

Nach Fig. 1 sind die Filterkästen (2) innerhalb des Filtergehäuses (1) waagerecht übereinander angeordnet.

Die Wände (4) der Filterkästen (2) sind dort gitterartig ausgeführt, wo Rauchgase hindurchströmen oder Wasser aufgesprüht werden soll.

In den Filterkästen (2) befindet sich das Filtermedium (3) in Gestalt von körniger Aktivkohle, Herdofenkoks oder einem ähnlichen Medium.

Rauchgas strömt von unten über den Rauchgaseinströmstutzen (5) in das Filtergehäuse (1) ein.

In dem unterhalb der Filterkästen (2) angeordneten Wasserauffangkasten (7) befinden sich vertikale Gasdurchströmrohre (8), durch die das Rauchgas weiter zu den darüberliegenden mit Filtermedium (3) gefüllten Filterkästen (2) gelangt.

Oberhalb eines jedes Filterkastens (2) befinden sich Sprühdüsen (6), mit denen Wasser auf die Filterkastenfüllung (Filtermedium 3) gesprüht wird. Ablaufendes Sprühwasser wird in den unten gelegenen Wasserauffangkasten (7) aufgefangen und mittels einer Pumpe (9) wieder den Düsen (6) der Düsenstränge aufgegeben.

Der Wasserauffangkasten (7) weist einen Wasserstandsanzeiger (10) auf. Sobald der Wasserstand im Wasser-auffangbehälter (10) eine festgesetzte Höhe unterschreitet, wird über einen Impuls das Ventil (11) in der Zusatzwasserleitung (12) geöffnet, so daß dem Filter zusätzliches Wasser zugeführt wird.

Am Boden des Wasserauffangkastens ist eine (nicht dargestellte) Einrichtung zum Entfernen von abgesetztem Schlamm angeordnet.

Das gereinigte Rauchgas tritt über den Abzugsstutzen (13) aus.

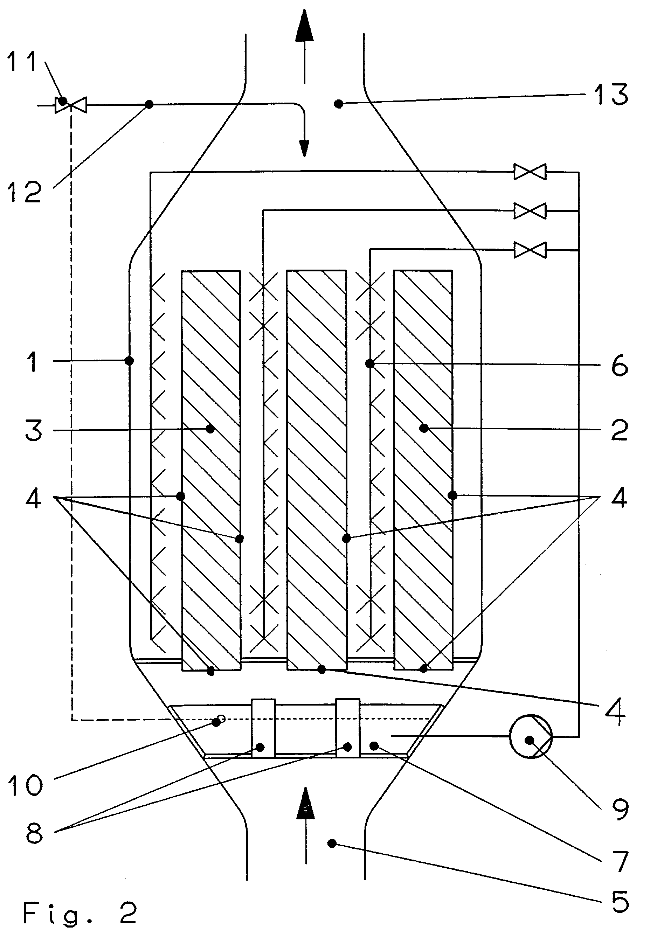

Fig. 2 zeigt einen Filter mit einem Filtergehäuse (1), in welchem die Filterkästen (2) senkrecht angeordnet sind. Die Sprühdüsen (6) sind dementsprechend in senkrechten Strängen installiert. Es kann entweder jeweils nur eine Fläche eines Filterkastens (2) besprüht werden oder bei entsprechender Anordnung der Düsenstränge lassen sich auch beide Filterflächen eines Filterkastens (2) besprühen.

Der übrige Aufbau des Filters entspricht dem nach Fig. 1. So ist auch hier beispielsweise ein Wasserauffangkasten (7) vorhanden und wird die Rückführung des aufgefangenen Wassers in gleicher Weise praktiziert wie dies bei dem Filter nach Fig. 1 geschieht.

## Patentansprüche

1. Filter zum Abscheiden von Schadstoffen aus Rauchgasen mit einem Filtergehäuse, enthaltend das Filtermedium Aktivkohle, Herdofenkoks oder dgl., mit einer Einrichtung zum dosierten Zugeben von Wasser, einer Abzugseinrichtung für mit Schadstoffen gesättigten Schlamm, ferner Rauchgaszufuhr- und Rauchgasabzugstutzen,
dadurch gekennzeichnet,
daß innerhalb des Filtergehäuses (1) eine Mehrzahl von mit Abstand waagerecht übereinander oder senkrecht nebeneinander angeordneten Filterkästen (2), enthaltend das Filtermedium (3), eingebaut sind,
daß die Wände (4) der Filterkästen (2) käfigartig ausgebildet, gas- und wasserdurchlässig sind, daß am Boden des Filtergehäuses (1), unterhalb der Filterkästen (2), mindestens ein Rauchgaseinströmstutzen (5) angeordnet ist,
daß bei der Ausführung mit waagerecht angeordneten Filterkästen (2) mindestens oberhalb jedes Filterkastens (2) bzw. bei senkrecht angeordneten Filterkästen (2) mindestens an einer Seite jedes Filterkastens Düsen (6) zur Wasserbesprühung der Filterkastenfüllung (Filtermedium 3), angeordnet sind,
daß unterhalb des untersten Filterkastens (2) bzw. bei senkrechter Anordung der Filterkästen (2) unterhalb dieser Filterkästen (2) ein Wasserauffangkasten (7) mit vertikalen Gasdurchströmrohren (8) angeordnet ist, aus dem das angesammelte Wasser mittels einer Pumpe (9) abgepumpt und den Düsen (6) zur Wasserbesprühung zugeführt wird und,
daß oben am Filtergehäuse (1) ein Absugstutzen (13) für gereinigtes Rauchgas angeordnet ist.

2. Filter nach Anspruch 1,
dadurch gekennzeichnet,
daß nur die der Gasströmung und der Wasserbesprühung ausgesetzten Wände (4) der Filterkästen (2) gas- und wasserdurchlässig ausgebildet sind.

3. Filter nach Anspruch 1,
dadurch gekennzeichnet,
daß der Wasserauffangkasten (7) einen Wasserstandsanzeiger (10) enthält, über den bei Unterschreiten des eingestellten Niveaus ein Öffnungsimpuls an das Ventil (11) in der Zusatzwasserleitung (12) übermittelbar ist.

4. Filter nach Anspruch 1,
dadurch gekennzeichnet,
daß das Filter derart ausgebildet ist, daß die waagerecht oder senkrecht angeordneten Filterkästen (2), enthaltend das Filtermedium (3), in der Weise innerhalb des Filtergehäuses (1) angebracht sind, daß sie bedarfsweise aus dem Filtergehäuse (1) herauszieh- oder heraushebbar sind.

5. Filter nach den Ansprüchen 1 bis 4,
dadurch gekennzeichnet,
daß das Filter aus einem Filtergehäuse (1) oder mehreren parallelgeschalteten Filtergehäusen (1) quadratischen, vieleckigen oder kreisförmigen Querschnitts besteht.
